# NEUE EUROPÄISCHE PATENTSCHRIFT

(11) **EP 1 399 864 B2**
(45) Veröffentlichungstag und Bekanntmachung des Hinweises auf die Entscheidung über den Einspruch: **15.04.2009**
(45) Hinweis auf die Patenterteilung: 31.08.2005
(21) Anmeldenummer: 02754787.6
(22) Anmeldetag: 28.06.2002
(51) Int. Cl.: G06Q 90/00

(54) **KONFEKTIONIERVORRICHTUNG**
MANUFACTURING DEVICE
DISPOSITIF DE PRODUCTION PERSONNALISEE

(30) Priorität: 29.06.2001 DE 10131045
(43) Veröffentlichungstag der Anmeldung: 24.03.2004
(73) Patentinhaber: Volkswagen Aktiengesellschaft, 38436 Wolfsburg (DE); Fricker, Achim, 50672 Köln (DE)
(72) Erfinder: FRICKER, Achim, 50672 Köln (DE); STOLL, Gerd, 51483 Overath (DE); HEINY, Ulrich, 3844 Wolfsburg (DE); FILIZLI, Ercin, 50672 Köln (DE)
(74) Vertreter: Grünecker, Kinkeldey, Stockmair & Schwanhäusser Anwaltssozietät
(86) Internationale Anmeldenummer: PCT/EP2002/007168
(87) Internationale Veröffentlichungsnummer: WO 2003/005253

(56) Entgegenhaltungen:
- EP-A1- 0 696 004
- EP-A2- 1 087 319
- WO-A1-00/43912
- DE-A1- 4 134 872
- DE-A1- 19 834 842
- DE-C2- 4 217 045
- DE-C2- 19 706 637
- US-A- 4 242 663
- US-A- 4 510 495
- US-A- 4 525 713
- US-A- 4 688 026
- US-A- 4 931 929
- US-A- 5 615 342
- US-A- 5 796 351
- ISHII H.; ULLMER B.: 'Tangible Bits: Towards Seamless Interfaces between People, Bits and Atoms.' HUMAN FACTORS IN COMPUTING SYSTEMS CHI 97 CONFERENCE PROCEED. 22 März 1997 - 27 März 1997, ATLANTA GA USA, Seiten 234 - 241

## Beschreibung

Die vorliegende Erfindung betrifft eine Konfektioniervorrichtung zum Konfektionieren von Waren.

Gewisse Waren, wie beispielsweise Küchen- oder Wohneinrichtungen, Kleidungsstücke oder Automobile können individuell nach Wunsch des Kunden konfektioniert werden. So ist üblich, dass ein Käufer eines neuen KFZ zunächst den Warentyp bestimmt, d.h. bei dem jeweiligen Händler die Marke und das Modell auswählt. Die derart bestimmte Ware wird von dem Kunden dann konfektioniert. Der Kunde hat die Möglichkeit, verschiedene Warengestaltungen frei zu wählen. Unter Warengestaltung können technische Merkmale, wie beispielsweise die Motorisierung und technische Sonderausstattungen verstanden werden. Unter Warengestaltung wird aber im Sinne der vorliegenden Erfindung insbesondere die auf das ästhetische Empfinden wirkende Gestaltung der Ware verstanden, d.h. die Farbe des Außenlackes, die Farbe der Polster, die Art des Polsters, die Farbe von Zierleisten, die Farbe von Ketern, die Holzart bzw. Maserung von Holzeinlagen, usw.

US 4931929 beschreibt eine Vorrichtung, in der Warentypen mit bestimmten Gestaltungen in einer Datenbank gespeichert sind. Die gewünschte Gestaltung kann teilweise mit einem Barcodeleser eingeführt werden.

Namenhafte Automobilhersteller bieten heute die Möglichkeit, eine Konfektionierung eines Fahrzeuges über das Internet, über Terminals oder über dem Kunden zur Verfügung gestellte CD-Roms vorzunehmen. Auf der entsprechenden Seite des Unternehmens wird der potentielle Käufer zunächst gebeten, einen Warentyp, d.h. ein bestimmtes Modell des Automobilunternehmens auszuwählen. Danach erfolgt die Gestaltung der Ware nach individuellem Kundenwunsch, und zwar menügeführt. Der Kunde wird durch verschiedene Auswahlbereiche geführt, in dem beispielsweise zunächst die gewünschte Motorisierung, ein Gestaltungspaket, danach die Wagenfarbe, die Art des Polsters, usw. ausgewählt werden müssen. Bei dieser Menüführung müssen sämtliche Felder bearbeitet werden, und zwar in der vorgegebenen Reihenfolge. Die Auswahl einer bestimmten Warengestaltung führt dazu, dass der zunächst ausgewählte und auf dem Bildschirm in seiner Form gezeigte Warentyp entsprechend der gewählten Warengestaltung dargestellt wird. So wird beispielsweise die Auswahl der Warengestaltung "Farbe des Außenlackes" nach Auswahl einer gewünschten Farbe durch den Kunden von einem dem Bildschirm zugeordneten Prozessor umgesetzt und der auf dem Bildschirm gezeigte Warentyp in der gewünschten Farbe angezeigt. Eine entsprechende Umsetzung ist denkbar für die Wahl der Felgen, die Wahl der Farbe des Polsters, gegebenenfalls die Wahl der Art des Polster, usw.

Bei der Konfektionierung von Fahrzeugen finden häufig Daten zur graphischen Darstellung des Warentyps Verwendung, die aus den Konstruktionsabteilungen der jeweiligen Automobilunternehmen stammen. Diese Daten erlauben beliebige dreidimensionale Ansichten des ausgewählten Warentyps. Dementsprechend ist es bekannt, dem Benutzer bei der Konfektionierung eines KFZ das in der Konfektionierung befindliche KFZ in jeder beliebigen dreidimensionalen Darstellung anzuzeigen. So können beispielsweise vergrößerte Details eingezoomt werden; das in der Konfektionierung befindliche Fahrzeug kann gedreht werden. Auch ist es möglich, einen Blick in den Innenraum darzustellen. Die Wiedergabe dieser verschiedenen, vorzugsweise dreidimensional dargestellten Ansichten, erfolgt üblicher Weise an einem ortsfesten Bildschirm.

Im Stand der Technik wird die Auswahl eines Warentyps insbesondere der jeweiligen Warengestaltungen über eine Eingabeeinrichtung vorgenommen. Diese Eingabeeinrichtung kann durch eine Tastatur oder ein Mausbedienelement gebildet sein. Häufig werden sogenannte Touch-Screens zur Dateneingabe verwendet, da ein Touch-Screen leichter und spielerischer von dem Benutzer zu handhaben ist. Gleichwohl hat der Benutzer auch bei der Verwendung eines Touch-Screens vorgegebene Bereiche in der angegebenen Reihenfolge abzuarbeiten, um sämtliche Entscheidungen bei der Konfektionierung seines Fahrzeuges zu treffen.

Die vorbekannten Systeme sind danach unflexibel. Darüber hinaus erfordern sie eine gewisse Übung bei der Handhabung eines Computers, zumindest über den Touch-Screen. Die Bearbeitung der Programme zur Durchführung der Konfektionierung erfordert zumindest ein gewisses Eingewöhnen. Darüber hinaus ist zu beachten, dass das Alter derjenigen Personen, die am häufigsten einen Neuwagen kaufen, etwa bei 46 Jahren liegt. Bei derartigen Menschen kann der selbstverständliche Umgang mit einem Computer nicht vorausgesetzt werden. Unabhängig vom Alter fühlt sich der Benutzer einer Konfektioniervorrichtung aufgrund des vorgegebenen Menüs in seiner Gestaltungsfreiheit eingeengt, was sich nachhaltig negativ auf den Spaß beim Konfektionieren einer zu bestellenden Ware auswirkt. Schließlich vermitteln reine Bildschirmdarstellungen kein hinreichendes Erleben der Wirkung der ausgewählten Gestaltungen und deren Zusammenspiel nach erfolgter Konfektionierung. Dies gilt insbesondere dann, wenn Gestaltungselemente, die eine Textur und eine bestimmte Haptik haben, ausgewählt und miteinander kombiniert werden sollen.

Davon ausgehend liegt der vorliegenden Erfindung das technische Problem zugrunde, eine Konfektioniervorrichtung der eingangs genannten Art anzugeben, welche sich leichter handhaben lässt und welche die Wirkung der einzelnen ausgewählten Warengestaltung sowie insbesondere die kombinatorische Wirkung verschiedener ausgewählter Warengestaltungen erlebbar macht. Der vorliegenden Erfindung liegt ferner die Aufgabe zugrunde, ein Verfahren zur Konfektionierung von Waren anzugeben, welches sich leichter handhaben lässt und welches die Wirkung der ausgewählten Warengestaltungen erlebbar macht.

Hinsichtlich der Vorrichtung wird mit der vorliegenden Erfindung zur Lösung des obigen Problems eine Konfektioniervorrichtung mit den Merkmalen von Anspruch 1 angegeben. Diese unterscheidet sich von dem gattungsbildenden Stand der Technik dadurch, dass ein Erkennungsmittel vorgesehen ist, mit dem ein Muster der wählbaren Warengestaltung erkennbar ist. Dieses Erkennungsmittel ist derart ausgebildet, dass es ein die Warengestaltung wiedergebendes Warengestaltungssignal erfasst. Das Warengestaltungssignal ist dem Muster zugeordnet. Durch Auswahl des Musters erfolgt gleichzeitig auch die Bestimmung des Warengestaltungssignals. Ober das Erkennungsmittel wird dieses Warengestaltungssignal an den Prozessor weitergeleitet, der aus dem Warengestaltungsspeicher eine bestimmte Warengestaltung auswählt und an dem Bildschirm anzeigt.

Im Gegensatz zum Stand der Technik bietet die erfindungsgemäße Konfektioniervorrichtung somit den Vorteil, dass einzelne Warengestaltungen in Form von reellen Mustern vorliegen, die bei der Konfektionierung der Ware zusammengestellt werden. Jedes einzelne Muster lässt die Wirkung der jeweils ausgewählten Warengestaltung erfahrbar machen. Bleibt man bei dem Beispiel eines KFZ, so erscheint eine Lackierung, beispielsweise eine Metalliclackierung mit ihren Lichtspiegelungen und ihrem metallisch schimmemden Glanz als reelles Abbild wesentlich attraktiver, als bei einer Darstellung ausschließlich am Bildschirm. Der Bildschirm übernimmt das Warengestaltungssignal der ausgewählten Lackierung und zeigt den Warentyp am Bildschirm mit seiner dreidimensionalen Gestaltung in der ausgewählten Lackierung an. Das Detail der Lackierung wird jedoch anhand dem Muster erfahrbar.

Darüber hinaus kann mit der vorliegenden Erfindung das Zusammenspiel der einzelnen ausgewählten Warengestaltungen reell erlebt werden. So können zu verschiedenen Warengestaltungen je ein Muster ausgewählt und neben bzw. übereinander angeordnet werden. Die von den einzelnen Mustern abgegebenen Warengestaltungssignale werden zur Erzeugung eines Gesamtbildes durch das Erkennungsmittel erfasst und an den Prozessor zur Darstellung weitergegeben. Anhand der Bildschirmdarstellung kann das Zusammenwirken der Farben und die Gesamtwirkung im Raum vermittelt werden. Ein tatsächliches Erleben der Zusammenwirkung der einzelnen Warengestaltungen erfolgt jedoch über das Zusammenwirken der reell vorliegenden Muster.

Aufgrund des Erkennungsmittels zum Erkennen eines Musters ermöglicht die erfindungsgemäße Konfektioniervorrichtung ein unmittelbares Erleben der Wirkung der reellen Warengestaltung. Dieses unmittelbare Erleben ist wesentlich intensiver als jede Darstellung an einem Bildschirm. Dies gilt im verstärkten Maße dann, wenn verschiedene Warengestaltungen, beispielsweise für den Innenraum eines KFZs miteinander kombiniert werden (Farbe der Polster, Art der Polster, Farbe von Ketem, evtl. Holzart bzw. Maserung von Holzeinlagen). Im Gegensatz zum gattungsbildenden Stand der Technik bietet die erfindungsgemäße Konfektioniervorrichtung auch einen haptischen Eindruck der jeweils auszuwählenden Warengestaltungen, denn die Muster liegen reell vor. Damit vermittelt die erfindungsgemäße Konfektioniervorrichtung ein nahezu reelles Bild der nach den Kundenwünschen später hergestellten Ware. Die erfindungsgemäße Konfektioniervorrichtung emotionalisiert aufgrund der tatsächlich vorliegenden Muster und deren edler Wirkung die zu treffende Auswahlentscheidung zu jeder Warengestaltung. Diese Auswahlentscheidung kann vorgenommen werden, ohne unmittelbar über den Bildschirm mit dem Prozessor in Interaktion treten zu müssen. Vielmehr reicht es für die Wiedergabe der Ware in der ausgewählten Warengestaltung aus, das entsprechende Muster auszuwählen, zu greifen und dem Erkennungsmittel zuzuführen. Die Handhabung der erfindungsgemäßen Konfektioniervorrichtung ist damit denkbar einfach.

Als Erkennungsmittel kann jedes denkbare Mittel vorgesehen sein, welches derart vorbereitet ist, dass es anhand von spezifischen Informationsträgern eine eindeutig bestimmte Warengestaltung erkennen kann. So ist es beispielsweise denkbar, ein Erkennungsmittel einer Barcode-Erkennung vorzusehen und an den entsprechenden Mustern korrespondierende und individuelle Barcodes anzuordnen. Aus Sicht der Verkaufspsychologie ist es jedoch zu bevorzugen, solche Erkennungsmittel einzusetzen, die keine besondere Handhabung zum Einlesen des Warengestaltungssignals erfordern. Vorzugsweise ist daher das Erkennungsmittel mit einer Empfängereinheit versehen, mit welcher das Warengestaltungssignal einer dem Muster zugeordneten Sendeeinheit empfangbar ist. In einem Verkaufsgespräch wird man eine Vielzahl von Mustern zu einer Warengestaltung zur Auswahl bereit halten. Durch entsprechende Abstimmung von Sendeeinheiten und Empfängereinheiten muss sichergestellt werden, dass erst nach Auswahl eines spezifischen Musters und Verbringen desselben in einen vorbestimmten örtlichen Bereich das dem Muster zugeordnete Warengestaltungssignal von der Empfängereinheit ermittelt wird.

Die bevorzugte Weiterbildung der erfindungsgemäßen Vorrichtung gemäß Anspruch 2 bietet den Vorteil, dass die an dem Muster vorgesehene Sendeeinheit ohne eigenständige Energiequelle auskommen kann. Hierdurch lässt sich vorzugsweise die Sendeeinheit in das Muster einarbeiten, was im Hinblick auf einen möglichst ungestörten ästhetischen Eindruck zu bevorzugen ist. Bei der erfindungsgemäßen Weiterbildung der Sendeeinheit durch einen Transponder kann auf Wartungs- und Instandhaltearbeiten an dem Transponder verzichtet werden.

Gemäß einer weiteren bevorzugten Ausgestaltung der vorliegenden Erfindung ist die Sendeeinheit programmierbar. Dies bietet den Vorteil, dass die Sendeeinheit zunächst mit dem jeweiligen Muster verbunden, vorzugsweise in dem Muster aufgenommen werden kann, ohne dass Rücksicht darauf genommen werden muss, welche Information die Sendeeinheit trägt. Weiterhin ist es möglich, zusätzliche Informationen in die Sendeeinheit einzuprogrammieren, deren Notwendigkeit sich erst bei einem Gebrauch der Konfektioniervorrichtung ergibt.

Die erfindungsgemäße Konfektioniervorrichtung weist einen an sich bekannten, dem Prozessor zugeordneten Gestaltungselementspeicher auf, in dem verschiedene wählbare Gestaltungselemente hinterlegt sind. Diesen verschiedenen Gestaltungselementen sind in dem Warengestaltungsspeicher jeweils verschiedene Gestaltungen zugeordnet. Das Gestaltungselement ist beispielsweise für das hier angeführte Beispiel eines Kraftfahrzeuges der Außenlack. Diesem Gestaltungselement sind verschiedene Farben als variable Warengestaltung zugeordnet. In dem Gestaltungselementspeicher sind mehrere verschiedene Gestaltungselemente hinterlegt, um bei dem Beispiel eines Automobils zu bleiben: Wagenfarbe, Polster, Vorhandensein von Zierleisten, Lenkradgestaltung und dergleichen.

Bei der erfindungsgemäßen Konfektioniervorrichtung wird dieser Gestaltungselementspeicher gleichfalls von dem ausgewählten Muster angesprochen. Hierzu ist dem ausgewählten Muster ein Elementsignal zugeordnet, durch welches aus dem Gestaltungselementspeicher ein bestimmtes Gestaltungselement ausgewählt wird. Mit anderen Worten, gibt das Elementsignal die "Funktion" bzw. "Ort" eines Musters an, wohingegen das Warengestaltungssignal das "Aussehen" eines Musters angibt. Durch die kombinatorische Ausbildung von Warengestaltungsspeicher und Gestaltungselementspeicher, die jeweils von dem ausgewählten Muster angesprochen werden, ist es möglich, mehrere Muster zeitgleich auszuwählen und über das Erkennungsmittel einzulesen. Anhand jedes einzelnen Musters wird dann die Funktion des jeweiligen Musters (Elementsignal) sowie das Aussehen des Musters (Warengestaltungssignal) erfasst. Um bei dem Beispiel eines Kraftfahrzeuges zu bleiben, ergibt sich ein nahezu vollständiges Bild der Innenausstattung des Fahrzeuges bei Auswahl eines Musters des Polsters (Textur und Farbe); eines Musters einer Zierleiste; eines Musters eines Keters sowie eines Musters einer Einlage. Im Rahmen des Kaufgespräches ist es nicht erforderlich, den jeweiligen Mustern die Funktion zuzuweisen. Das Muster ist Träger sowohl der Information "Aussehen" als auch der Information "Funktion".

Aus dem obigen ergibt sich, dass mit der vorliegenden Erfindung eine Konfektioniervorrichtung angegeben wird, welche unter Verwendung an sich bekannter Elemente einer Konfektioniervorrichtung einen unmittelbaren Bezug zu den auszuwählenden Warengestaltungen herstellt. Die Qualität des Materials, die exakte Wirkung und insbesondere die Textur und haptischen Eigenschaften der Warengestaltung können reell erlebt werden. Der optische Gesamteindruck bei einer Verwirklichung der ausgewählten Warengestaltungen erfolgt - wie im Stand der Technik genannt - über einen oder mehrere Bildschirme. Der mit der Konfektioniervorrichtung arbeitende Kunde und Besteller einer Ware ist nicht gezwungen, über Bildschirm und/oder Tastatur mit dem Prozessor zu kommunizieren. Diese Kommunikation kann ausschließlich über das ausgewählte Muster erfolgen. Mit der erfindungsgemäßen Konfektioniervorrichtung kann das Konfektionieren einer Ware, beispielsweise eines KFZs auf bisher nicht bekannte Weise erlebt werden. Der Kunde ist allein mit der Auswahl der Materialien befasst und erfährt eine Zusammenwirkung der Materialien in der reellen Welt. Der Kunde hat vollkommene gestalterische Freiheit und wird auch im Hinblick auf die Eingabe seiner Auswahl und die zeitliche Abfolge seiner Auswahl nicht beschränkt. Der Kunde erfährt die Konfektionierung der Ware als Erlebnis frei von jeder direkten Interaktion mit dem Prozessor. Auch ein den Kunden begleitender Verkäufer kann seine gesamte Aufmerksamkeit auf den Kunden und das Verkaufsgespräche ausrichten und wird nicht durch Eingaben an dem Prozessor in Beschlag genommen.

Darüber hinaus ist die Konfektioniervorrichtung vollständig intuitiv. Der Kunde muss lediglich nach dem Muster greifen und das Muster in einem vorbestimmten Bereich anordnen. Er kann eine beliebige Anzahl von verschiedenen Warengestaltungen in Form von jeweils einem Muster zu jeder Warengestaltung zusammenstellen. Insbesondere bei der Verwirklichung eines Gestaltungselementspeichers ist der Kunde in der Reihenfolge der Auswahl jeder einzelnen Warengestaltung vollkommen frei.

Die erfindungsgemäße Konfektioniervorrichtung kann selbstverständlich auch einen Warentypspeicher umfassen, der von einem Warentypmuster, welches über das Erkennungsmittel erkannt wird, angesprochen wird. Es ist ohne weiteres denkbar, die Konfektioniervorrichtung allein über Muster soweit anzusteuern, dass beispielsweise selbst eine sehr komplexe Ware, wie ein Automobil bis zum letzten frei wählbaren Ausstattungsmerkmal konfektioniert ist.

Zur Lösung des verfahrensmäßigen Aspekts des vorstehend erwähnten Problems wird dementsprechend mit der vorliegenden Erfindung ein Konfektionierverfahren zum Konfektionieren von Waren vorgeschlagen, bei dem in an sich bekannter Weise ein vorbekannter Warentyp an einem Bildschirm dargestellt und bei dem wenigstens eine Warengestaltung ausgewählt und der dargestellte Warentyp in der ausgewählten Warengestaltung an dem Bildschirm angezeigt wird. Das erfindungsgemäße Verfahren unterscheidet sich jedoch vom Stand der Technik dadurch, dass die Warengestaltung über ein in einem Prozessor verarbeitetes Signal bestimmt wird, welches einem ausgewählten reellen Muster der entsprechenden Warengestaltung zugeordnet ist.

## Patentansprüche

1. Konfektioniervorrichtung zum Konfektionieren von Waren mit
einem Prozessor, dem ein Warentypenspeicher, in dem wenigstens ein das Erscheinungsbild eines Warentyps wiedergebender Datensatz gespeichert ist, sowie ein Warengestaltungenspeicher, in dem mehrere unterschiedliche Warengestaltungen zu einem Warentyp wiedergebende Daten gespeichert sind, zugeordnet sind, mit einer Eingabeeinrichtung zur Auswahl eines Warentyps und/oder einer Warengestaltung;
einem dem Prozessor zugeordneten Gestaltungselementenspeicher, in dem verschiedene wählbare Gestaltungselemente hinterlegt sind, denen in dem Warengestaltungsspeicher jeweils verschiedene Gestaltungen zugeordnet sind; und einem Bildschirm zum Anzeigen eines vorbestimmten oder ausgewählten Warentyps mit der ausgewählten Warengestaltung,
**dadurch gekennzeichnet,**
**dass** die Konfektioniervorrichtung ferner ein Erkennungsmittel zum Erkennen eines ausgewählten Musters der wählbaren Warengestaltungen aufweist, wobei das Erkennungsmittel ein die Warengestaltung und das Gestaltungselement wiedergebendes Signal erfasst, durch welches aus dem Warengestaltungenspeicher eine bestimmte dem Muster entsprechende Warengestaltung und
aus dem Gestaltungselementenspeicher ein bestimmtes Gestaltungselement gewählt wird,
**dass** das Erkennungsmittel eine Empfängereinheit umfasst, mit der das Signal einer dem ausgewählten Muster zugeordneten Sendeeinheit empfangbar ist,
**dass** die Sendeeinheit und die Empfängereinheit derart aufeinander abgestimmt sind, dass das Signal des aus mehreren für den Benutzer der Konfektioniervorrichtung bereitgehaltenen Mustern ausgewählten Musters erst dann von der Empfängereinheit erfasst wird, wenn das ausgewählte Muster in einen vorbestimmten, für den Benutzer erreichbaren örtlichen Bereich verbracht wird.

2. Konfektioniervorrichtung nach Anspruch 1, **dadurch gekennzeichnet, dass** die Empfängereinheit eine Empfängerplatte umfasst und dass die Sendeeinheit durch einen Transponder gebildet ist, der durch eine von der Empfängerplatte abgegebene Energie das Warengestaltungssignal abgibt.

3. Konfektioniervorrichtung nach Anspruch 1 oder 2, **dadurch gekennzeichnet, dass** die Sendeeinheit programmierbar ist.

## Claims

1. A configurator for configuring articles, comprising
a processor having associated therewith a type-of-article memory, which has stored therein at least one data record representative of the outward appearance of a type of article, and an article design memory having stored therein data representative of a plurality of different article designs related with one type of article,
an input unit for selecting a type of article and/or an article design;
a design element memory, which is associated with the processor and which has stored therein various selectable design elements, each of said design elements having associated therewith various designs in the article design memory; and
a screen for displaying a predetermined or a selected type of article with the selected article design,
**characterized in that**
the configurator additionally comprises a recognition means for recognizing a selected sample of the selectable article designs, said recognition means detecting a signal which is representative of the article design and of the design element and by means of which a specific article design corresponding to the sample is selected from the article design memory and a specific design element is selected from the design element memory,
that the recognition means comprises a receiver unit which is adapted to receive the signal of a transmitting unit associated with the sample,
that the transmitting unit and the receiver unit are adapted to one another in such a way that the signal of the sample selected from a plurality of samples presented to the user of the configurator will not be detected by the receiver unit until the selected sample has been transferred to a predetermined local area that is within reach of the user.

2. A configurator according to claim 1, **characterized in that** the receiver unit comprises a receiver plate, and that the transmitting unit is defined by a transponder which transmits the article design signal through energy supplied by said receiver plate.

3. A configurator according to claim 1 or 2, **characterized in that** the transmitting unit is adapted to be programmed.

## Revendications

1. Dispositif de production personnalisée pour la production personnalisée de produits, comprenant :
- un processeur auquel sont associées une mémoire de types de produit dans laquelle est stocké au moins un enregistrement logique reproduisant l'aspect d'un type de produit, et une mémoire de configurations de produit dans laquelle sont stockées des données reproduisant plusieurs configurations différentes pour un type de produit,
- un dispositif d'entrée pour sélectionner un type de produit et/ou une configuration de produit,
- une mémoire d'éléments de configuration associée au processeur, dans laquelle sont stockés différents éléments de configuration aptes à être choisis auxquels des configurations différentes sont associées dans la mémoire de configurations de produit, et
- un écran pour visualiser un type de produit prédéfini ou sélectionné, avec la configuration de produit sélectionnée,
**caractérisé en ce que** le dispositif de production personnalisée comporte aussi un moyen de reconnaissance pour reconnaître un échantillon sélectionné des configurations de produit aptes à être choisies, ce moyen de reconnaissance détectant un signal qui reproduit la configuration de produit et l'élément de configuration et grâce auquel une configuration de produit définie, correspondant à l'échantillon, peut être sélectionnée dans la mémoire de configurations de produit et un élément de configuration défini peut être sélectionné dans la mémoire d'éléments de configuration,
**en ce que** le moyen de reconnaissance comprend une unité de réception grâce à laquelle le signal d'une unité d'émission associée à l'échantillon sélectionné peut être reçu, et
**en ce que** l'unité d'émission et l'unité de réception sont accordées l'une à l'autre de telle sorte que le signal de l'échantillon qui est sélectionné parmi plusieurs échantillons disponibles pour l'utilisateur du dispositif de production personnalisée ne soit détecté par l'unité de réception que lorsque l'échantillon sélectionné est transféré dans une zone locale prédéfinie accessible pour l'utilisateur.

2. Dispositif de production personnalisée selon la revendication 1, **caractérisé en ce que** l'unité de réception comprend une plaque de réception et **en ce que** l'unité d'émission est formée par un transpondeur qui émet le signal de configuration de produit grâce à une énergie émise par la plaque de réception.

3. Dispositif de production personnalisée selon la revendication 1 ou 2, **caractérisé en ce que** l'unité d'émission est programmable.
